# EUROPÄISCHE PATENTANMELDUNG

(11) **EP 1 619 908 A1**
(43) Veröffentlichungstag der Anmeldung: **25.01.2006**
(21) Anmeldenummer: 05023442.6
(22) Anmeldetag: 26.01.2004
(51) Int. Cl.: H04Q 7/22

(54) **Verfahren zur Kommunikation und netzseitige Einrichtung in einem Funkkommunikationssystem**

(30) Priorität: 03.02.2003 EP 03250668
(62) Teilanmeldung aus: 04705057.0
(71) Anmelder: SIEMENS AKTIENGESELLSCHAFT, 80333 München (DE)
(72) Erfinder: Edwin, Diana Clare, Southampton SO15 4HU (GB); Gessner, Christina, 81379 München (DE); Proctor, Toby Kier, Southampton SO14 3TP (GB); Traynard, Jean-Michel, 81667 München (DE)

(57) **Zusammenfassung**

Die Erfindung betrifft ein Verfahren zur Übertragung von Informationen in einem Funkkommunikationssystem mit einer Mehrzahl von Teilnehmerstationen und mindestens einer Funkzugangseinrichtung (BS), wobei Nutzinformationen (MULTI_INFO1, MULTI_INFO2) einer Gruppe (G) von Teilnehmerstationen über Funk übermittelt werden, wobei sich eine Anzahl von Teilnehmerstationen der Gruppe (G) innerhalb des Funkabdeckungsbereichs (BS) der mindestens einen Funkzugangseinrichtung (BS) befindet, und wobei die mindestens eine Funkzugangseinrichtung (BS) die Teilnehmerstationen der Gruppe (G) vor der Übertragung der Nutzinformation unter Verwendung einer Funkressource benachrichtigt. Erfindungsgemäß wird für die Übermittlung der Nutzinformationen (MULTI_INFO1, MULTI_INF02) durch die mindestens eine Funkzugangseinrichtung (BS) eine Funkressource verwendet in Abhängigkeit von dem Empfang von mindestens einem Antwortsignal (ANSWER1, ANSWER2, ANSWER3) auf die Benachrichtigung (PAGING1, PAGING2) der Anzahl von Teilnehmerstationen in der mindestens einen Funkzugangseinrichtung (BS) und/oder von dem Inhalt von mindestens einem Antwortsignal (ANSWER1, ANSWER2, ANSWER3) auf die Benachrichtigung (PAGING1, PAGING2) der Teilnehmerstationen.

## Beschreibung

Die Erfindung betrifft ein Verfahren zur Übertragung von Informationen in einem Funkkommunikationssystem nach dem Oberbegriff des Anspruchs 1.

Weiterhin betrifft die Erfindung eine netzseitige Einrichtung in einem Funkkommunikationssystem nach dem Oberbegriff des Anspruchs 5.

In Funkkommunikationssystemen werden Informationen (beispielsweise Sprache, Bildinformation, Videoinformation, SMS [Short Message Service] oder andere Daten) mit Hilfe von elektromagnetischen Wellen über eine Funkschnittstelle zwischen sendender und empfangender Station, wie z.B. Funkzugangseinrichtungen und Teilnehmerstationen, übertragen. Das Abstrahlen der elektromagnetischen Wellen erfolgt dabei mit Trägerfrequenzen, die in dem für das jeweilige System vorgesehenen Frequenzband liegen.

Üblicherweise sind mindestens eine Funkzugangseinrichtung und eine Einrichtung zur Funkzugangskontrolle (BSC, Base Station Controller) Bestandteile eines Basisstationssubsystems (RNS, Radio Network Subsystem bzw. BSS, Base Station Subsystem). Ein Funkkommunikationssystem umfasst in der Regel mehrere Basisstationssubsysteme, die an ein Kernnetz (CN, Core Network) angeschlossen sind. Dabei ist die Einrichtung zur Funkzugangskontrolle des Basisstationssubsystems mit einer Zugangseinrichtung des Kernnetzes verbunden.

Für das eingeführte GSM-Mobilfunksystem (Global System for Mobile Communication) werden Frequenzen bei 900, 1800 und 1900 MHz genutzt. Diese Systeme übermitteln im wesentlichen Sprache, Telefax und Kurzmitteilungen, sowie digitale Daten.

Für zukünftige Mobilfunksysteme mit CDMA- oder TD/CDMA-Übertragungsverfahren, wie beispielsweise UMTS (Universal Mobile Telecommunication System) oder andere Systeme der dritten Generation, sind Frequenzen im Frequenzband von ca. 2000 MHz vorgesehen. Diese Systeme der dritten Generation werden entwickelt mit den Zielen weltweiter Funkabdeckung, einem großen Angebot an Diensten zur Datenübertragung und vor allem einer flexiblen Verwaltung der Kapazität der Funkschnittstelle, die bei Funk-Kommunikationssystemen die Schnittstelle mit den geringsten Ressourcen ist.

Der Zugriff von Teilnehmerstationen auf das gemeinsame Übertragungsmedium wird bei Funkkommunikationssystemen durch Vielfachzugriffsverfahren/Multiplexverfahren (Multiple Access, MA) geregelt. Bei diesen Vielfachzugriffen kann das Übertragungsmedium im Zeitbereich (Time Division Multiple Access, TDMA), im Frequenzbereich (Frequency Division Multiple Access, FDMA), im Codebereich (Code Division Multiple Access, CDMA) oder im Raumbereich (Space Division Multiple Access, SDMA) zwischen den Teilnehmerstationen aufgeteilt werden. Auch Kombinationen mehrerer dieser Verfahren werden angewendet. Um einen sparsamen Umgang mit den knappen Funkressourcen zu ermöglichen, befinden sich in Funkkommunikationssystemen Einrichtungen, welche die Funkressourcen verwalten bzw. eine Ressourcenzuteilung vornehmen. Die Funkressource einer Funkschnittstelle kann hierbei zum Beispiel ein Zeitschlitz-Frequenz-Paar oder auch nur eines von beiden (Zeitschlitz oder Frequenz) sein.

Für die Adressierung von Teilnehmerstationen in Funkkommunikationssystemen sind verschiedene Verfahren bekannt. Neben dem Einzelsenderuf (Unicast), bei dem genau eine Teilnehmerstation adressiert wird, ist der Rundsenderuf (Broadcast), bei dem alle Teilnehmerstationen innerhalb des Funkabdeckungsbereichs der sendenden Funkzugangseinrichtung adressiert werden, am häufigsten vertreten. Weiterhin ist der Gruppensenderuf (Multicast) bekannt, bei dem die Teilnehmerstationen einer Multicast-Gruppe gleichzeitig mit dem Aussenden einer Multicast-Information adressiert werden. Ein Multicast, bei dem die adressierte Gruppe alle Teilnehmerstationen in der Reichweite einer Funkzugangseinrichtung umfasst, entspricht einem Broadcast. Üblicherweise ist für Multicast-Dienste die Zugehörigkeit der adressierten Teilnehmerstationen zu einer begrenzten Gruppe erforderlich, während dies für Broadcast-Dienste nicht gegeben ist.

Neben individuellen Nutzinformationen werden in Funkkommunikationssystemen somit Nutzinformationen übertragen, die mehreren Teilnehmerstationen zur Verfügung gestellt werden. Beispielsweise umfassen solche Nutzinformationen Video streams oder Werbetexte oder allgemeine Informationen wie Verkehrsmeldungen. Die Dienste zur Übertragung von Nutzinformationen, welche nicht nur individuell für einen einzigen Teilnehmer vorgesehen sind, sondern mehreren Teilnehmern zur Verfügung gestellt werden, werden unter dem Begriff MBMS (Multimedia Broadcast/Multicast Service) zusammengefasst. Unterschiedliche MBMS-Dienste werden vom Kernnetz in der Regel als separate Datenströme bereitgestellt.

Bevor die Nutzinformationen einer Gruppe von Teilnehmerstationen übermittelt werden, erfolgt eine Benachrichtigung der Teilnehmerstationen der Teilnehmer, welche den Dienst nutzen wollen. Diese Benachrichtigung der Teilnehmerstationen ist notwendig, damit die Empfänger konfiguriert werden können. Üblicherweise werden zur Benachrichtigung gruppenspezifische Mechanismen angewendet, bei denen mehrere Teilnehmerstationen gleichzeitig angesprochen werden. Der Erfindung liegt die Aufgabe zugrunde, ein Verfahren und eine netzseitige Einrichtung der eingangs genannten Art aufzuzeigen, welche einen effizienten Umgang mit den knappen Funkressourcen eines Funkkommunikationssystems erlauben.

Diese Aufgabe wird hinsichtlich des Verfahrens gelöst durch ein Verfahren mit den Merkmalen des Anspruchs 1.

Ausgestaltungen und Weiterbildungen sind Gegenstand der Unteransprüche.

Das Funkkommunikationssystem umfasst eine Mehrzahl von Teilnehmerstationen. Nutzinformationen werden einer Gruppe von Teilnehmerstationen über Funk übermittelt. Eine Anzahl von Teilnehmerstationen der Gruppe befindet sich innerhalb des Funkabdeckungsbereichs der mindestens einen Funkzugangseinrichtung, sie werden von der mindestens einen Funkzugangseinrichtung vor der Übermittlung der Nutzinformationen benachrichtigt.

Die Gruppe umfasst hierbei mindestens eine Teilnehmerstation, vorzugsweise jedoch eine Mehrzahl von Teilnehmerstationen. Die Anzahl von Teilnehmerstationen innerhalb des Funkabdeckungsbereiches der mindestens einen Funkzugangseinrichtung kann Null oder eine ganzzahlige Zahl größer Null betragen, maximal jedoch gleich der Anzahl der Teilnehmerstationen der Gruppe sein.

Für die Übermittlung der Nutzinformationen durch die mindestens eine Funkzugangseinrichtung wird eine Funkressource verwendet in Abhängigkeit von dem Empfang von mindestens einem Antwortsignal auf die Benachrichtigung der Teilnehmerstationen der Anzahl von Teilnehmerstationen in der mindestens einen Funkzugangseinrichtung und/oder von dem Inhalt von mindestens einem Antwortsignal auf die Benachrichtigung der Teilnehmerstationen der Anzahl von Teilnehmerstationen.

Bei der für die Übermittlung der Nutzinformationen verwendeten Funkressource, deren Art oder Eigenschaften von mindestens einem Antwortsignal abhängen, kann es sich insbesondere um verschiedene Arten von Funkkanälen handeln. Die Funkressource kann z.B. gekennzeichnet sein durch eine Frequenzangabe, eine Zeitangabe, eine Codeangabe, eine Richtung der Abstrahlung oder eine Kombination derselben.

Die Antwortsignale können verschiedene Inhalte aufweisen. So kann der Inhalt der Antwortsignale z.B. eine Identifikationsinformation enthalten, aus welcher hervorgeht, dass das betreffende Signal ein Antwortsignal auf die Benachrichtigung ist. Weiterhin könnte das Funknetz bei Verwendung eines geeigneten Funkkanals für die Antwortsignale anhand des Funkkanals erkennen, dass es sich bei dem Signal um ein Antwortsignal handelt.

Relevant für die Abhängigkeit der Funkressource ist hierbei Empfang und/oder Inhalt von mindestens einem Antwortsignal. Die Größen Empfang und Inhalt können sich zumindest teilweise auf verschiedene Antwortsignale, aber auch auf gleiche Antwortsignale beziehen. Bezüglich des Empfangs eines Antwortsignals ist der Tatbestand "empfangen" oder "nicht empfangen" von Interesse. Bei mehreren Antwortsignalen kann weiterhin die Anzahl an empfangenen Antwortsignalen relevant für die Abhängigkeit der Funkressource sein.

In einer Ausgestaltung der Erfindung werden bei Empfang von keinem Antwortsignal auf die Benachrichtigung der Teilnehmerstationen der Anzahl von Teilnehmerstationen in der mindestens einen Funkzugangseinrichtung die Nutzinformationen nicht durch die mindestens eine Funkzugangseinrichtung übermittelt. Die Vorgehensweise, bei der die Nutzinformationen nicht übermittelt werden, kann in einer oder mehreren Funkzellen angewandt werden, während zur gleichen Zeit in einer oder mehreren anderen Funkzellen die Nutzinformationen erfindungsgemäß auf Funkressourcen übermittelt werden. Weiterhin kann in einer Funkzelle die Vorgehensweise, bei der die Nutzinformationen nicht übermittelt werden, sich zeitlich abwechseln mit der erfindungsgemäßen Übermittlung der Nutzinformationen auf Funkressourcen.

Vorteilhafterweise wird für die Übermittlung der Nutzinformationen durch die mindestens eine Funkzugangseinrichtung entweder eine teilnehmerspezifische oder eine gruppenspezifische Funkressource verwendet. Bei einer teilnehmerspezifischen Funkressource handelt es sich z.B. um einen dedizierten Funkkanal, welcher eigens für eine Teilnehmerstation reserviert ist und den ausschließlich die adressierte Teilnehmerstation auswertet (Unicast), während ein Beispiel für eine gruppenspezifische Funkressource ein Broadcast- oder Multicast-Kanal ist. Bei einer solchen letztgenannten Funkressource wird keine einzelne Teilnehmerstation adressiert, sondern alle Teilnehmerstationen innerhalb des Funkabdeckungsbereiches des betreffenden Funkzugangspunktes oder alle Teilnehmerstation einer Multicast-Gruppe sind Adressat der Nutzinformationen. Bei einem dedizierten Funkkanal handelt es sich um eine Punkt-zu-Punkt Verbindung, während eine gruppenspezifische Funkressource bei einer Punkt-zu-Mehrpunkt Verbindung verwendet wird.

In Weiterbildung der Erfindung wird für die Übermittlung der Nutzinformationen durch die mindestens eine Funkzugangseinrichtung eine Funkressource verwendet in Abhängigkeit von einer Anzahl an in der mindestens einen Funkzugangseinrichtung empfangenen Antwortsignalen auf die Benachrichtigung der Teilnehmerstationen der Anzahl von Teilnehmerstationen. So kann z.B. ab dem Empfang einer zu bestimmenden Anzahl von Antwortsignalen, welche einem Schwellwert entsprechen kann, eine bestimmte Art von Funkkanal für die Übermittlung der Nutzinformationen verwendet werden. Das Unter- bzw. Überschreiten des Schwellwertes ist dann entscheidend für die für die Übermittlung der Nutzinformationen verwendete Funkressource.

Die oben genannte Aufgabe wird hinsichtlich der netzseitigen Einrichtung durch eine netzseitige Einrichtung mit den Merkmalen des Anspruchs 5 gelöst.

Erfindungsgemäß weist die netzseitige Einrichtung Mittel zum Entscheiden über die Verwenden einer Funkressource für die Übermittlung der Nutzinformationen in Abhängigkeit von dem Empfang von mindestens einem Antwortsignal auf die Benachrichtigung der Anzahl von Teilnehmerstationen in der mindestens einen Funkzugangseinrichtung und/oder von dem Inhalt von mindestens einem Antwortsignal auf die Benachrichtigung der Anzahl von Teilnehmerstationen auf.

Die erfindungsgemäße netzseitige Einrichtung muss baulich nicht von der Funkzugangseinrichtung getrennt sein. So ist es möglich, dass in dem Funkkommunikationssystem eine Einrichtung existiert, welche die Funktionalität einer Funkzugangseinrichtung in Form von Sende- und Empfangsvorrichtungen in Verbindung mit geeigneten Steuereinrichtungen, sowie die erfindungsgemäßen Mittel der netzseitigen Einrichtung aufweist. Die netzseitige Einrichtung ist insbesondere geeignet zur Durchführung des erfindungsgemäßen Verfahrens. Weitere Mittel und Vorrichtungen zur Durchführung des Verfahrens können in der netzseitigen Einrichtung vorgesehen sein.

Einzelheiten und Details der Erfindung werden im Folgenden anhand eines Ausführungsbeispiels näher erläutert.

Dabei zeigen:
- Figur 1:: einen Ausschnitt aus einem Funkkommunikationssystem,
- Figur 2:: ein Ablaufdiagramm eines erfindungsgemäßen Verfahrens,
- Figur 3:: den Aufbau einer erfindungsgemäßen Benachrichtigung.

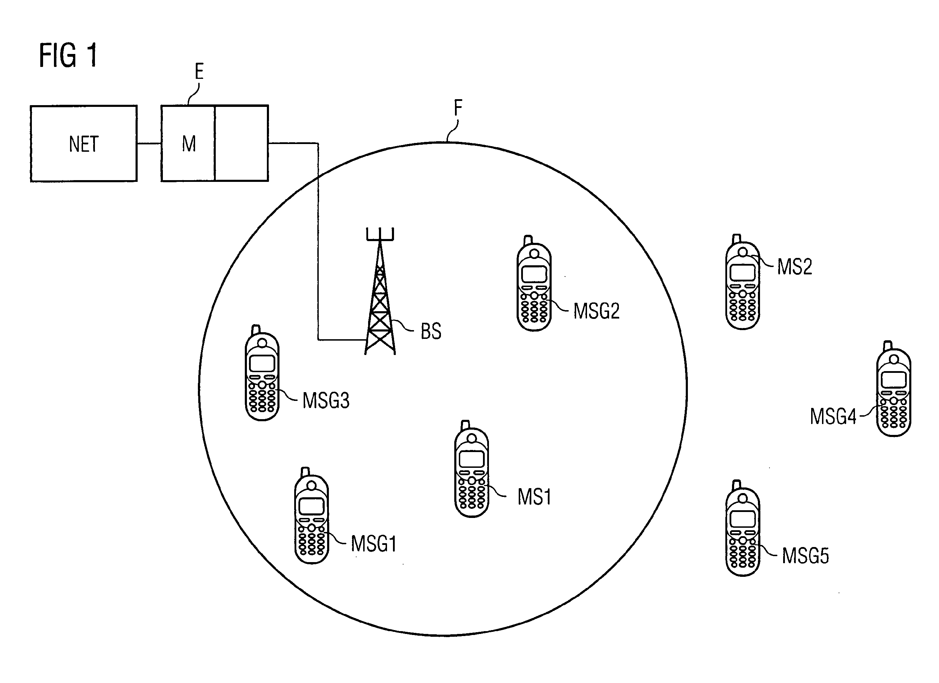

In Figur 1 ist ein Ausschnitt aus einem Funkkommunikationssystem nach dem Standard GSM gezeigt, welcher eine Funkzugangseinrichtung BS in Form einer Basisstation, eine Mehrzahl von Teilnehmerstationen MS1, MS2, MSG1, MSG2, MSG3, MSG4 und MSG5, sowie eine netzseitige Einrichtung E und weitere netzseitige Einrichtungen NET beinhaltet. Die Einrichtung E ist sowohl mit der Funkzugangseinrichtung BS als auch mit den weiteren netzseitigen Einrichtungen NET verbunden. Die weiteren netzseitigen Einrichtungen NET können eine oder mehrere Verbindungen zu anderen Funkkommunikationssystemen aufweisen.

Die Einrichtung E kann z.B. durch eine Einrichtung zur Funkzugangskontrolle (BSC, Base Station Controller) realisiert werden. Sie kann baulich auch mit der Funkzugangseinrichtung BS verbunden sein und somit eine multifunktionale Einrichtung darstellen.

Der Rand des Funkabdeckungsbereiches F der Funkzugangseinrichtung BS ist durch einen Kreis angedeutet. Innerhalb dieses Funkabdeckungsbereichs F befinden sich die Teilnehmerstationen MS1, MSG1, MSG2 und MSG3. Die anderen Teilnehmerstationen MS2, MSG4 und MSG5 befinden sich außerhalb des Funkabdeckungsbereiches F der Funkzugangseinrichtung BS. Sie können sich innerhalb eines Funkabdeckungsbereichs einer oder mehrerer anderer Funkzugangseinrichtungen des Funkkommunikationssystems befinden - zur Vereinfachung der Darstellung in Figur 1 nicht gezeigt - oder auch außerhalb der Funkabdeckungsbereiche der Funkzugangseinrichtungen des Funkkommunikationssystems.

Die Teilnehmer zu den jeweiligen Teilnehmerstationen MSG1, MSG2, MSG3, MSG4 und MSG5 haben einen Multicast-Dienst subskribiert. Somit bilden die Teilnehmerstationen MSG1, MSG2, MSG3, MSG4 und MSG5 eine Gruppe. Es werden in dem Funkkommunikationssystem Nutzinformationen wie z.B. Börseninformationen oder Videos gesendet, welche die Teilnehmerstationen MSG1, MSG2, MSG3, MSG4 und MSG5 der Gruppe empfangen und entschlüsseln können. Teilnehmerstationen außer den Teilnehmerstationen MSG1, MSG2, MSG3, MSG4 und MSG5 der Gruppe, d.h. die Teilnehmerstationen MS1 und MS2, können diese Multicast-Informationen nicht entschlüsseln. Die Multicast-Informationen werden von der Funkzugangseinrichtung BS für die Teilnehmerstationen MSG1, MSG2 und MSG3 innerhalb ihres Funkabdeckungsbereiches F versendet. Die anderen Teilnehmerstationen MSG4 und MSG5 außerhalb des Funkabdeckungsbereichs F der Funkzugangseinrichtung BS können die Multicast-Informationen von einer anderen Funkzugangseinrichtung des Funkkommunikationssystems empfangen. Ist zeitweilig keine Funkverbindung zwischen diesen Teilnehmerstationen MSG4 und MSG5 und dem Funknetz des Funkkommunikationssystems möglich, so empfangen die Teilnehmerstationen MSG4 und MSG5 die Multicast-Informationen während dieser Zeitspanne nicht.

Die folgenden Ausführungen beziehen sich zur Vereinfachung lediglich auf die Teilnehmerstationen MSG1, MSG2 und MSG3 innerhalb des Funkabdeckungsbereiches F der Funkzugangseinrichtung BS.

Befinden sich mehrere Teilnehmerstationen einer Multicast-Gruppe innerhalb einer Funkzelle, so können die Nutzinformationen des Multicast-Dienstes, d.h. die Multicast-Informationen, durch ein Punkt-zu-Mehrpunkt (point to multipoint) Verfahren übermittelt werden. Eine Punkt-zu-Mehrpunkt Übertragung findet hierbei auf einer gemeinsamen Funkressource für mehrere Teilnehmer, d.h. einer gruppenspezifischen Funkressource, statt, welche ähnlich ausgestaltet ist wie ein Broadcast-Kanal (BCH, Broadcast Channel). Eine andere Möglichkeit zur Übertragung von Multicast-Informationen ist es, jedem Teilnehmer der Multicast-Gruppe diese Nutzinformationen auf einer teilnehmerspezifischen, dem Dienst vollständig zugewiesenen Funkressource, d.h. einem dedizierten Kanal, zu senden.

Die Sendeleistung, welche bei einer Übermittlung der Multicast-Informationen auf einem Punkt-zu-Mehrpunkt Kanal angewandt wird, ist in der Regel deutlich höher als die für eine Übertragung dieser Informationen auf einem Punkt-zu-Punkt Kanal eingesetzte Sendeleistung. Insbesondere unterliegt die Sendeleistung der Multicast-Informationen auf einem Punkt-zu-Mehrpunkt Kanal keiner Leistungsregelung, was im Gegensatz hierzu bei einer Übertragung dieser Informationen auf einem Punkt-zu-Punkt Kanal gegeben ist. Befinden sich eine Vielzahl von Teilnehmerstationen in einer Funkzelle, so ist es vorteilhaft, die Multicast-Informationen auf einem Punkt-zu-Mehrpunkt Kanal zu übertragen. Dieses Vorgehen führt zu einer Einsparung von knappen Funkressourcen in Abwärtsrichtung (DL, Downlink). Befinden sich jedoch nur wenige Teilnehmerstationen in einer Funkzelle, so kann die Ausstrahlung der Multicast-Informationen auf einem Punkt-zu-Mehrpunkt Kanal aufgrund der hohen Sendeleistung dieses Funkkanals im Vergleich zu einem Punkt-zu-Punkt Kanal ungünstig sein. Die hohe Sendeleistung des gemeinsamen Kanals führt zu unerwünschten Interferenzen in der Funkzelle. Durch eine Versendung der Multicast-Informationen auf einem oder mehreren Punkt-zu-Punkt Kanälen könnten in diesem Fall Funkressourcen eingespart und Übertragungsqualitäten verbessert werden.

Um die Teilnehmerstationen MSG1, MSG2 und MSG3 der Multicast-Gruppe des betrachteten Beispiels konfigurieren zu können, ist es notwendig, diese vor der Übertragung der Nutzinformation zu benachrichtigen. Diese Benachrichtigung kann gruppenspezifisch auf einem gemeinsam genutzten Kanal, wie z.B. einem Paging-Kanal, durchgeführt werden. Hierbei können sich die Teilnehmerstationen MSG1, MSG2 und MSG3 insbesondere in einem Leerlauf-Modus, auch als Idle Mode bezeichnet, befinden. Im folgenden wird davon ausgegangen, dass sich die Teilnehmerstationen MSG1, MSG2 und MSG3 in einem solchen Leerlauf-Modus befinden. Das erfindungsgemäße Verfahren ist jedoch auch auf Teilnehmerstationen in anderen Betriebszuständen als dem Leerlaufmodus anwendbar. Der Leerlaufmodus zeichnet sich dadurch aus, dass die Teilnehmerstationen im Leerlaufmodus zwar in dem Kernnetz, nicht aber in dem Funkzugangsnetz (Radio Access Network, RAN) eines Funkkommunikationssystems durch eine Identifikationsinformation bekannt sind. Einer Einrichtung zur Funkzugangskontrolle bleibt es somit verborgen, welche Teilnehmerstationen im Leerlaufmodus sich in den Funkzellen der ihr angeschlossenen Funkzugangseinrichtungen befinden. Eine Teilnehmerstation im Leerlaufmodus tauscht mit dem Funknetz keine Informationen aus, bis eine Verbindungsanfrage durch die Teilnehmerstation oder durch das Funknetz gestellt wird. Nach einer solchen Verbindungsanfrage wechselt die Teilnehmerstation in den Verbindungsmodus. Eine Verbindungsanfrage kann z.B. durch die Nachfrage der Teilnehmerstation nach einem Dienst oder auch durch eine Paging-Anfrage des Funknetzes initiiert werden.

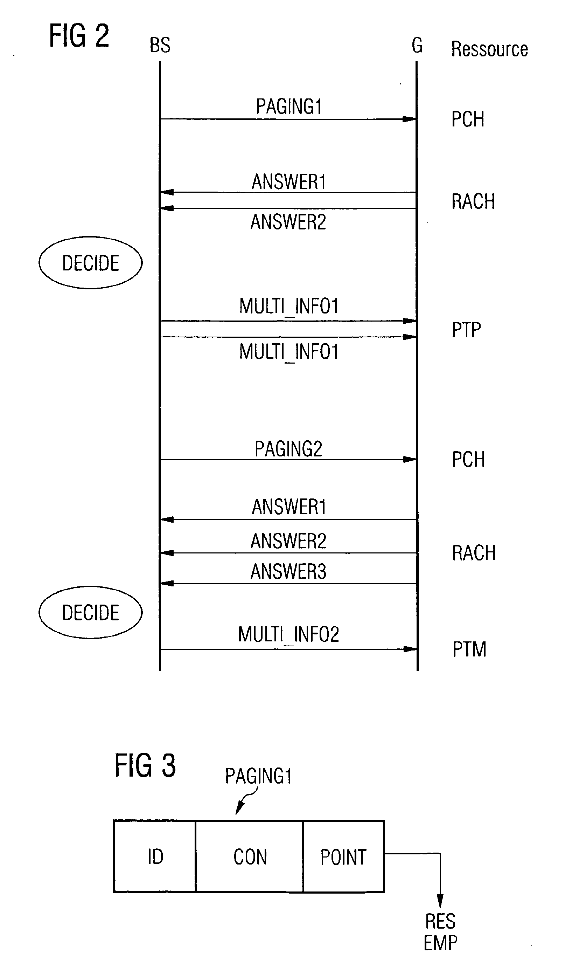

Figur 2 zeigt exemplarisch den Ablauf eines erfindungsgemäßen Verfahrens. Im linken Teil der Figur 2 sind die Signale dargestellt, welche zwischen der Funkzugangseinrichtung BS und den Teilnehmerstationen der Gruppe G ausgetauscht werden. Auf der rechten Seite findet sich eine Angabe der zur Übertragung der jeweiligen Signale verwendeten Funkressource.

Die Funkzugangseinrichtung sendet eine Benachrichtigung PAGING1 über die bevorstehende Übertragung von Multicast-Informationen auf einem Paging-Kanal PCH an die Teilnehmerstationen der Gruppe G. Der Funkzugangseinrichtung ist nicht bekannt, wie viele Teilnehmerstationen sich innerhalb ihres Funkabdeckungsbereichs befinden. Senden alle Teilnehmerstationen MSG1, MSG2 und MSG3 der Gruppe G, welche sich innerhalb des Funkabdeckungsbereichs der Funkzugangseinrichtung BS befinden, nach Empfang der Benachrichtigung PAGING1 ein Antwortsignal, so kennt die Funkzugangseinrichtung BS die Anzahl an Teilnehmerstationen der Gruppe G innerhalb ihres Funkabdeckungsbereichs.

Figur 3 zeigt den Aufbau einer erfindungsgemäßen Benachrichtigung PAGING1. Diese besteht aus einem ersten Feld mit Identifikationsinformationen ID, welche die Multicast-Informationen betreffen. Hierbei kann es sich z.B. um eine Nummer handeln, welche dem Multicast-Dienst zugeordnet ist. Die Teilnehmerstationen, welche den Paging-Kanal PCH abhören und somit die Benachrichtigung PAGING1 empfangen, können an den Informationen ID erkennen, ob die Benachrichtigung PAGING1 für sie relevant ist. Ein Antwortsignal sollen und dürfen nur diejenigen Teilnehmerstationen senden, die anhand der Informationen ID erkennen, dass sie Adressat der Benachrichtigung PAGING1, d.h. Mitglied der Multicast-Gruppe, sind.

Als weiteres Feld enthält die Benachrichtigung PAGING1 ein Feld mit Informationen POINT. Diese Informationen POINT stellen einerseits einen Zeiger auf die Versendung von Informationen über den Multicast-Dienst auf einer anderen Funkressource RES als dem Paging-Kanal PCH dar. Diese Informationen über den Multicast-Dienst auf der anderen Funkressource RES werden insbesondere wiederholt, zum Beispiel in regelmäßigen Zeitabständen ausgestrahlt. Bei der anderen Funkressource RES kann es sich z.B. um einen AGCH (Access Grant Channel) bzw. einen FACH (Forward Allocation Channel) handeln. Die andere Funkressource RES kann sich von der Funkressource für die Benachrichtigung PAGING1 z.B. durch Frequenz und/oder Zeit und/oder Code und/oder Abstrahlrichtung unterscheiden. Die Zeigerfunktion der Informationen POINT besteht darin, dass den Teilnehmerstationen durch die Informationen POINT die andere Funkressource RES angegeben wird, so dass sie in der Lage sind, die Informationen über den Multicast-Dienst der anderen Funkressource auszuwerten.

Die Informationen über den Multicast-Dienst können z.B. Informationen über die zur Ausstrahlung der Multicast-Informationen genutzten Funkressourcen eines Punkt-zu-Mehrpunkt Kanals enthalten. Die Informationen über den Multicast-Dienst ermöglichen es den Teilnehmerstationen - gegebenenfalls auch in Kombination mit den Benachrichtigungen - , die Multicast-Informationen zu empfangen und auszuwerten. Daher sollte jede Teilnehmerstation vor Empfang von Multicast-Informationen die Informationen über den Multicast-Dienst empfangen haben. Für eine weitere Versendung von Multicast-Informationen ist eine nochmalige Auswertung der Informationen über den Multicast-Dienst nicht nötig. Die Zeigerfunktion auf die Informationen über den Multicast-Dienst ist daher insbesondere für Teilnehmerstationen von Interesse, welche als neue Nutzer des Multicast-Dienstes in der Funkzelle hinzukommen. Hierbei handelt es sich z.B. um Teilnehmerstationen, welche zuvor ausgeschaltet waren, oder welche von einer anderen Funkzelle in die betrachtete Funkzelle gewechselt sind.

Andererseits können die Informationen POINT auch den Inhalt des Signals auf der anderen Funkressource RES betreffen. So ist es möglich, dass die Informationen POINT angeben, dass oder wann sich bei einer wiederholten Ausstrahlung der Informationen über den Multicast-Dienst diese Informationen verändert haben, z.B. in Form eines Updates. Die Veränderungen der Informationen über den Multicast-Dienst mit der Zeit sind auch für diejenigen Teilnehmerstationen relevant, welche nicht als neue Nutzer des Multicast-Dienstes in der Funkzelle hinzugekommen sind. Auch sie sollten vor dem Empfang der nächsten Multicast-Informationen erneut die Informationen über den Multicast-Dienst beachten.

Schließlich können die Informationen POINT die Informationen über den Multicast-Dienst auf der anderen Funkressource RES insofern betreffen, als angegeben wird, welche Teilnehmerstationen EMP diese Informationen über den Multicast-Dienst auswerten sollen. So können die Informationen POINT eine Einteilung von Teilnehmerstationen in Untergruppen beinhalten, an welche jeweils eine Aufforderung zur Beachtung der Informationen über den Multicast-Dienst ergeht bzw. nicht ergeht. Vorteilhafterweise kann somit angegeben werden, dass Teilnehmerstationen, welche die zuletzt gesendeten Multicast-Informationen nicht empfangen haben, die Informationen über den Multicast-Dienst empfangen und auswerten sollen. Bei einem Update dieser Informationen hingegen sollten die Informationen POINT indizieren, dass alle Teilnehmerstationen der Multicast-Gruppe die Informationen über den Multicast-Dienst auswerten.

Die Verwendung der Informationen POINT ist insbesondere dann ressourcensparend für den Paging-Kanal PCH, wenn es sich bei den Informationen der anderen Funkressource um eine ausführliche Beschreibung des Multicast-Dienstes handelt. Somit kann eine ressourcenaufwendige Ausstrahlung der Informationen über den Multicast-Dienst bei jeder Paging-Nachricht vermieden werden.

Weiterhin enthält die Benachrichtigung PAGING1 eine Aufforderung, unter eine Bedingung CON ein Antwortsignal zu senden. Trifft die Bedingung zu, so zeigt dies der empfangenden Teilnehmerstation an, ob sie ein Antwortsignal auf die Benachrichtigung PAGING1 senden soll. So kann die Bedingung CON z.B. lauten, dass ein Antwortsignal zu senden ist, wenn in einem Feld ein Symbol mit der Bedeutung "ja" zu finden ist. Die Verwendung eines "nein" oder das Ausbleiben eines "ja" an dieser Stelle ist z.B. dann hilfreich, wenn davon ausgegangen werden kann, dass sich in der betreffenden Funkzelle aktuell eine Vielzahl von Teilnehmerstationen befinden, wie z.B. in einem vollen Fußballstadium. So können Funkressourcen in Aufwärtsrichtung (UL, Uplink) eingespart werden.

Eine andere Bedingung kann sich auf eine Identifikationsinformation der Teilnehmerstation beziehen. Z.B. könnten alle Teilnehmerstationen mit einer ungeraden Ziffer der Identifikationsinformation aufgefordert werden, ein Antwortsignal zu senden.

Besonders vorteilhaft ist es, wenn die Bedingung CON eine Zeitspanne enthält, welcher die Teilnehmerstationen entnehmen können, ob sie ein Antwortsignal senden sollen oder nicht. Die Zeitspanne kann sich hierbei z.B. auf die Zeitspanne beziehen, welche vergangen ist, seit eine Teilnehmerstation die letzte Benachrichtigung über eine bevorstehende Multicast-Übertragung empfangen hat. In diesem Fall können diejenigen Teilnehmerstationen aufgefordert werden, ein Antwortsignal zu senden, die vor einer Zeitspanne, welche größer als die in der Bedingung CON aufgeführte Zeitspanne ist, die letzte Benachrichtigung generell oder in einer bestimmten Funkzelle erhalten haben. Somit können bevorzugt Teilnehmerstationen in der Zelle erfasst werden, welche kürzlich eingeschaltet wurden oder die betreffende Zelle betreten haben. Weiterhin kann sich die Zeitspanne auf die Zeitspanne nach dem Empfang der Benachrichtigung PAGING1 beziehen. Dies kann z.B. bedeuten, dass ein Antwortsignal nicht später als zu einem bestimmten Zeitpunkt, nämlich nach Ablauf der Zeitspanne nach dem Empfang der Benachrichtigung PAGING1, gesendet werden soll.

Die Bedingung CON kann auch mit den Informationen POINT verknüpft werden, wie z.B. durch eine Bedingung, dass diejenigen Teilnehmerstationen, welche die Informationen über den Multicast-Dienst auf der anderen Funkressource RES noch nicht abgehört haben, ein Antwortsignal senden, oder durch eine Bedingung, welche die Teilnehmerstationen EMP zur Versendung eines Antwortsignals auffordert.

Die Verwendung einer Bedingung CON ermöglicht es, Ressourcen in Aufwärtsrichtung einzusparen, da gegebenenfalls nicht alle Teilnehmerstationen der Gruppe, welche durch die Benachrichtigung PAGING1 angesprochen wurden, ein Antwortsignal senden. Weiterhin kann unter Umständen die Wahrscheinlichkeit für Kollisionen von Antwortsignalen verringert werden, wenn weniger Antwortsignale als die maximal mögliche Anzahl an Antwortsignalen gesendet werden.

Die Benachrichtigung PAGING1 kann außer den beschriebenen Feldern situationsabhängig weitere Felder aufweisen. Gegebenenfalls kann auch für eine oder mehrere Benachrichtigungen auf eines oder mehrere der beschriebenen Felder verzichtet werden.

Die beschriebene Benachrichtigung PAGING1 wird in der netzseitigen Einrichtung unter Verwendung der Mittel M (Figur 1) erzeugt. Diese leitet die Benachrichtigung PAGING1 an die Funkzugangseinrichtung BS weiter, welche sie an die Teilnehmerstationen übermittelt.

In Figur 2 ist der Fall dargestellt, dass zwei Teilnehmerstationen der Gruppe G auf die Benachrichtigung PAGING1 ein Antwortsignal ANSWER1 und ANSWER2 senden. Eine Bedingung CON kann in diesem Fall z.B. gelautet haben, dass eine Antwort nur innerhalb einer bestimmten Zeitspanne nach dem Empfang der Benachrichtigung erfolgen darf. Diese Versendung der Antwortsignale ANSWER1 und ANSWER2 erfolgt auf einem Funkkanal RACH, welcher auch für Zufallszugriffe auf Funkressourcen der Funkzelle verwendet wird. Es ist jedoch auch möglich, einen eigens für Antwortsignale eingerichteten Funkkanal zu verwenden. Um netzseitig eine Zuordnung zwischen den Antwortsignalen ANSWER1 und ANSWER2 und der Benachrichtigung PAGING1 herstellen zu können, sind die Antwortsignale ANSWER1 und ANSWER2 mit einer entsprechenden Kennzeichnung, wie z.B. mit den Identifikationsinformationen ID der Benachrichtigung PAGING1, versehen.

Die Funkzugangseinrichtung BS leitet die Antwortsignale ANSWER1 und ANSWER2 an die netzseitige Einrichtung E der Figur 1 weiter. Unter Verwendung von geeigneten Mitteln zählt die Einrichtung E die empfangenen Antwortsignale ANSWER1 und ANSWER2. Das Ergebnis der Abzählung wird dann mit einem Schwellwert, welcher im Folgenden drei betragen soll, verglichen. Der Wert des Schwellwertes kann konstant sein oder mit der Zeit verändert werden, so ist z.B. eine Anpassung des Schwellwertes an die aktuelle Verkehrsauslastung der Funkzelle möglich. Die Art der Funkressource, welche für die anstehende Versendung der Multicast-Informationen verwendet werden soll, hängt von dem Ergebnis des Vergleichs ab. Im vorliegenden Beispiel wird entschieden, dass aufgrund der Tatsache, dass die Anzahl der in der Funkzugangseinrichtung BS empfangenen Antwortsignale ANSWER1 und ANSWER2 unterhalb des Schwellwertes liegt, die Multicast-Informationen auf Punkt-zu-Punkt Kanälen gesendet werden. Der beschriebene Entscheidungsprozess ist in Figur 2 in dem Schritt DECIDE zusammengefasst.

Die Entscheidung über die Art der Funkressource, welche für die anstehende Versendung der Multicast-Informationen verwendet werden soll, kann zusätzlich oder alternativ zu der Anzahl der empfangenen Antwortsignale ANSWER1 und ANSWER2 auch von anderen Kriterien abhängig gemacht werden. So können z.B. die Antwortsignale Informationen von den Teilnehmerstationen beinhalten, welche Funkressource für die Übermittlung der Multicast-Informationen verwendet werden soll.

In dem Fall, dass keine Teilnehmerstation der Gruppe G auf die Benachrichtigung PAGING1 antwortet, kann die Einrichtung E entscheiden, die Multicast-Informationen in der betreffenden Funkzelle nicht durch die Funkzugangseinrichtung BS versenden zu lassen. Dadurch können Funkressourcen in Abwärtsrichtung eingespart werden.

Die getroffene Entscheidung, die Multicast-Informationen über Punkt-zu-Punkt Kanäle an die Teilnehmerstationen der Gruppe G zu übermitteln, wird der Funkzugangseinrichtung BS von der Einrichtung E mitgeteilt, woraufhin diese die Multicast-Informationen MULTI_INFO1 über Punkt-zu-Punkt Kanäle PTP an die beiden Teilnehmerstationen, welche die Antwortsignale ANSWER1 und ANSWER2 gesendet haben, übermittelt.

Vor der Versendung der nächsten Multicast-Informationen sendet die Funkzugangseinrichtung BS erneut eine Benachrichtigung PAGING2 auf dem Paging-Kanal PCH. Der Aufbau dieser Benachrichtigung PAGING2 entspricht im Prinzip demjenigen, welcher bereits für die Benachrichtigung PAGING1 beschrieben wurde, er kann sich jedoch in seiner konkreten Ausgestaltung von der Benachrichtigung PAGING1 unterscheiden. Die Benachrichtigung PAGING2 enthält als Bedingung CON zur Versendung eines Antwortsignals ein Feld mit dem Inhalt "ja". Auf die Benachrichtigung PAGING2 senden daher drei Teilnehmerstationen der Gruppe G Antwortsignale ANSWER1, ANSWER2 und ANSWER3 auf dem Funkkanal für Zufallszugriffe RACH. Die Anzahl dieser Antwortsignale ANSWER1, ANSWER2 und ANSWER3 wird in einem Entscheidungsprozess DECIDE mit dem Schwellwert verglichen. Da die Anzahl der Antwortsignale ANSWER1, ANSWER2 und ANSWER3 den Schwellwert drei nicht unterschreitet, wird nun entschieden, die Multicast-Informationen auf einem Punkt-zu-Mehrpunkt Kanal zu versenden. Die Versendung der nächsten Multicast-Informationen MULTI_INFO2 an die Teilnehmerstationen der Gruppe erfolgt daher auf dem Punkt-zu-Mehrpunkt Kanal PTM.

Das beschriebene Verfahren erlaubt es, durch eine Adaption der Art des Übertragungskanals an die empfangenen Antwortsignale, Multicast-Informationen ressourcensparend zu übermitteln.

## Patentansprüche

1. Verfahren zur Übertragung von Informationen in einem Funkkommunikationssystem mit einer Mehrzahl von Teilnehmerstationen (MS1, MS2, MSG1, MSG2, MSG3, MSG4, MSG5) und mindestens einer Funkzugangseinrichtung (BS),
wobei Nutzinformationen (MULTI_INFO1, MULTI_INFO2) einer Gruppe (G) von Teilnehmerstationen (MSG1, MSG2, MSG3, MSG4, MSG5) über Funk übermittelt werden,
wobei sich eine Anzahl von Teilnehmerstationen (MSG1, MSG2, MSG3) der Gruppe (G) innerhalb des Funkabdeckungsbereichs (F) der mindestens einen Funkzugangseinrichtung (BS) befindet,
wobei die mindestens eine Funkzugangseinrichtung (BS) die Anzahl von Teilnehmerstationen vor der Übermittlung der Nutzinformation (MULTI_INFO1, MULTI_INFO2) unter Verwendung einer Funkressource mittels einer Benachrichtigung (PAGING1, PAGING2) benachrichtigt,
**dadurch gekennzeichnet,**
**dass** für die Übermittlung der Nutzinformationen (MULTI_INFO1, MULTI_INFO2) durch die mindestens eine Funkzugangseinrichtung (BS) eine Funkressource verwendet wird in Abhängigkeit von dem Empfang von mindestens einem Antwortsignal (ANSWER1, ANSWER2, ANSWER3) auf die Benachrichtigung (PAGING1, PAGING2) der Anzahl von Teilnehmerstationen in der mindestens einen Funkzugangseinrichtung (BS) und/oder von dem Inhalt von mindestens einem Antwortsignal (ANSWER1, ANSWER2, ANSWER3) auf die Benachrichtigung (PAGING1, PAGING2) der Anzahl von Teilnehmerstationen.

2. Verfahren nach Anspruch 1,
**dadurch gekennzeichnet,**
**dass** bei Empfang von keinem Antwortsignal (ANSWER1, ANSWER2, ANSWER3) auf die Benachrichtigung (PAGING1, PAGING2) der Anzahl von Teilnehmerstationen in der mindestens einen Funkzugangseinrichtung (BS) die Nutzinformationen (MULTI_INFO1, MULTI_INFO2) nicht durch die mindestens eine Funkzugangseinrichtung (BS) übermittelt werden.

3. Verfahren nach Anspruch 1 oder 2,
**dadurch gekennzeichnet,**
**dass** für die Übermittlung der Nutzinformationen (MULTI_INFO1, MULTI_INFO2) durch die mindestens eine Funkzugangseinrichtung (BS) entweder eine teilnehmerspezifische (PTP) oder eine gruppenspezifische (PTM) Funkressource verwendet wird.

4. Verfahren nach einem der Ansprüche 1 bis 3,
**dadurch gekennzeichnet,**
**dass** für die Übermittlung der Nutzinformationen (MULTI_INFO1, MULTI_INFO2) durch die mindestens eine Funkzugangseinrichtung (BS) eine Funkressource verwendet wird in Abhängigkeit von einer Anzahl an in der mindestens einen Funkzugangseinrichtung (BS) empfangenen Antwortsignalen (ANSWER1, ANSWER2, ANSWER3) auf die Benachrichtigung (PAGING1, PAGING2) der Anzahl von Teilnehmerstationen.

5. Netzseitige Einrichtung in einem Funkkommunikationssystem mit einer Mehrzahl von Teilnehmerstationen (MS1, MS2, MSG1, MSG2, MSG3, MSG4, MSG5) und mindestens einer Funkzugangseinrichtung (BS),
in welchem Nutzinformationen (MULTI_INFO1, MULTI_INFO2) einer Gruppe (G) von Teilnehmerstationen (MSG1, MSG2, MSG3, MSG4, MSG5) über Funk übermittelt werden,
mit Mitteln zum Erzeugen einer Benachrichtigung (PAGING1, PAGING2), welche vor der Übermittlung der Nutzinformation (MULTI_INFO1, MULTI_INFO2) unter Verwendung einer Funkressource von der mindestens einen Funkzugangseinrichtung (BS) an die Teilnehmerstationen der Gruppe (G) zu versenden ist, und
**gekennzeichnet durch**
Mittel zum Entscheiden über die Verwenden einer Funkressource für die Übermittlung der Nutzinformationen (MULTI_INFO1, MULTI_INFO2) in Abhängigkeit von dem Empfang von mindestens einem Antwortsignal (ANSWER1, ANSWER2, ANSWER3) auf die Benachrichtigung (PAGING1, PAGING2) der Anzahl von Teilnehmerstationen in der mindestens einen Funkzugangseinrichtung (BS) und/oder von dem Inhalt von mindestens einem Antwortsignal (ANSWER1, ANSWER2, ANSWER3) auf die Benachrichtigung (PAGING1, PAGING2) der Anzahl von Teilnehmerstationen.
